# EUROPEAN PATENT APPLICATION

(11) **EP 4 729 801 A1**
(43) Date of publication of application: **22.04.2026**
(21) Application number: 25208989.1
(22) Date of filing: 15.10.2025
(51) Int. Cl.: F16F 1/02, F16F 1/22, F01D 5/10, F16F 1/18

(54) **METHOD AND APPARATUS FOR INCREASING SPRING RATE OF LINEAR SPRINGS**

(30) Priority: 15.10.2024 US 202418916163
(71) Applicant: RTX Corporation, Farmington, CT 06032 (US)
(72) Inventor: ROACH, James, Vernon, 06066 (US)
(74) Representative: Dehns

(57) **Abstract**

A constrained linear spring (20) can increase a spring rate of a linear spring. A constrained linear spring (20) includes a linear spring element (100) having a first end (102) and extends in a first direction to a second end (104), with one or more undulations extending in a second direction transverse to the first direction. The linear spring element (100) has a first spring rate when compressed in the second direction with the first and second ends (102, 104) unconstrained. The constrained linear spring (20) also includes a constraining element (200; 210; 220) dimensioned to contact the first and second ends (102, 104) and at least one undulation of the linear spring element (100) when the linear spring element (100) is uncompressed. The constrained linear spring element (100) of the constrained linear spring (20) has a second spring rate higher than the first spring rate when compressed in the second direction that can be useful to counteract a forward overturning moment (50) in an airfoil (45) of a vane (40).

## Description

### FIELD OF THE INVENTION

The subject matter disclosed herein relates to linear springs and, in particular, to methods and devices for increasing springs rates of linear springs, as well as an application thereof to counteract moments experienced in ceramic matrix composite (CMC) vanes.

### BACKGROUND OF THE INVENTION

Certain gas turbine engines employ ceramic matrix composite (CMC) vanes mounted between inner and outer platforms. Such CMC vanes are often subject to high stress due to a forward overturning moment caused by forces on the airfoil on the CMC vane. However, the components surrounding the CMC vanes and the properties of CMC material limit the available design choices that may be used to counter the forward overturning moment.

It has been proposed to apply a radial load to counteract the forward overturning moment. For space considerations, it would be desirable to use a linear spring. However, the present commercially-available options either require too much design space or do not result in a sufficient spring load during service.

The above information disclosed in this Background section is only for understanding of the background of the inventive concepts and, therefore, it may contain information that does not constitute prior art.

### SUMMARY OF THE INVENTION

The present invention is directed, in a first aspect, to a constrained linear spring. The constrained linear spring includes a linear spring element formed of resilient material, the linear spring element having a first end and extending in a first direction to a second end, and including one or more undulations extending in a second direction transverse to the first direction, wherein the linear spring element has a first spring rate when compressed in the second direction with the first and second ends unconstrained. The constrained linear spring further includes a constraining element dimensioned to contact the first and second ends and at least one undulation of the linear spring element when the linear spring element is uncompressed, wherein the constrained linear spring element of the constrained linear spring has a second spring rate higher than the first spring rate when compressed in the second direction.

In an embodiment of the above, the linear spring element may have a uniform width in a third direction transverse to the first and second directions.

In an embodiment according to any of the previous embodiments, the linear spring element may include a plurality of uniform sinusoidal undulations.

In an embodiment according to any of the previous embodiments, the resilient material may be a high temperature metal alloy having a first thickness.

In an embodiment according to any of the previous embodiments, the constraining element may be a clip that retains the first and second ends of the linear spring element.

In an embodiment according to any of the previous embodiments, the clip may also be formed of the high temperature metal alloy having the first thickness.

In an embodiment according to any of the previous embodiments, the linear spring element and the clip may be integral and formed as a single piece.

In an embodiment according to any of the previous embodiments, the constraining element may be a recess having a length substantially equal to a length of the linear spring element in the first direction.

In an embodiment according to any of the previous embodiments, the resilient material may be a ceramic matrix composite (CMC).

In an embodiment according to any of the previous embodiments, the constraining element may be a recess having a length substantially equal to a length of the linear spring element in the first direction.

The present invention is directed, in a second aspect, to a method of making a constrained linear spring that includes providing a linear spring element of a resilient material, the linear spring element having a first end and extending in a first direction to a second end, and including one or more undulations extending in a second direction transverse to the first direction, wherein the linear spring element has a first spring rate when compressed in the second direction with the first and second ends unconstrained. The method of making the constrained linear spring further includes providing a constraining element to the linear spring element, the constraining element dimensioned to contact the first and second ends and at least one undulation of the linear spring element when the linear spring element is uncompressed, wherein the constrained linear spring element of the constrained linear spring has a second spring rate higher than the first spring rate when compressed in the second direction.

In an embodiment of the above, the linear spring element may be provided with a uniform width in a third direction transverse to the first and second directions, and may be formed with a plurality of uniform sinusoidal undulations.

In an embodiment according to any of the previous embodiments, the resilient material may be a high temperature metal alloy having a first thickness.

In an embodiment according to any of the previous embodiments, the step of providing the constraining element may include providing a clip that retains the first and second ends of the linear spring element, wherein the clip is formed of the high temperature metal alloy having the first thickness.

In an embodiment according to any of the previous embodiments, the step of providing the linear spring element and the clip may include integrally forming the linear spring element and the clip as a single piece.

In an embodiment according to any of the previous embodiments, the resilient material may be a ceramic matrix composite (CMC) and providing the constraining element may include forming a recess having a length substantially equal to a length of the linear spring element in the first direction.

The present invention is further directed, in a third aspect, to a method of counteracting a forward overturning moment in an airfoil of a ceramic matrix composite (CMC) vane. The method of counteracting the forward overturning moment includes preparing a constrained linear spring by providing a linear spring element formed of resilient material, the linear spring element having a first end and extending in a first direction to a second end, and including one or more undulations extending in a second direction transverse to the first direction, wherein the linear spring element has a first spring rate when compressed in the second direction with the first and second ends unconstrained. The method of counteracting the forward overturning moment further includes constraining the linear spring element with a constraining element dimensioned to contact the first and second ends and at least one undulation of the linear spring element when the linear spring element is uncompressed, wherein the constrained linear spring element of the linear spring has a second spring rate higher than the first spring rate when compressed in the second direction, and applying the linear spring to provide a force between a support surface and at least one of a lower forward portion of an inner vane platform adjacent a leading edge of the airfoil and an upper rear portion of an outer vane platform adjacent a trailing edge of the airfoil to counteract the forward overturning moment in the airfoil.

In an embodiment of the above, the linear spring element may have a uniform width in a third direction transverse to the first and second directions, and may be formed with a plurality of uniform sinusoidal undulations.

In an embodiment according to any of the previous embodiments, the constraining element may be selected from the group consisting of: a clip having a thickness substantially identical to a thickness of the linear spring element, a recess in one of the support surface, the inner vane platform, or the outer vane platform, and a constraining element formed integrally with the linear spring element.

In an embodiment according to any of the previous embodiments, at least one of the linear spring element and the constraining element may be formed of CMC material and/or a high temperature metal alloy.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a side view of a linear spring in accordance with the prior art;
FIG. 2 is a side view of a linear spring in accordance with the present disclosure;
FIG. 3A is a perspective view of a linear spring element useful in the linear spring of the present disclosure;
FIG. 3B is a side view of the forces acting on a linear spring element when used in the linear spring of the present disclosure;
FIG. 4A is a side view of a clip embodiment of a linear spring in accordance with the present disclosure;
FIG. 4B is a side view of a recess embodiment of a linear spring in accordance with the present disclosure;
FIG. 4C is a side view of an integral embodiment of a linear spring in accordance with the present disclosure;
FIG. 5 is a graph of a percentage of commercial spring load versus percentage of applied deflection comparing a commercial linear spring to a linear spring in accordance with the present disclosure;
FIG. 6 is a perspective view of a linear spring in accordance with the present disclosure applied to a vane platform to counteract an overturning moment in the vane; and
FIG. 7 is a flow diagram of a method of counteracting an overturning moment in a vane in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its scope. The invention is therefore to be limited only by the terms of the claims, along with the full scope of equivalents to which the claims are entitled.

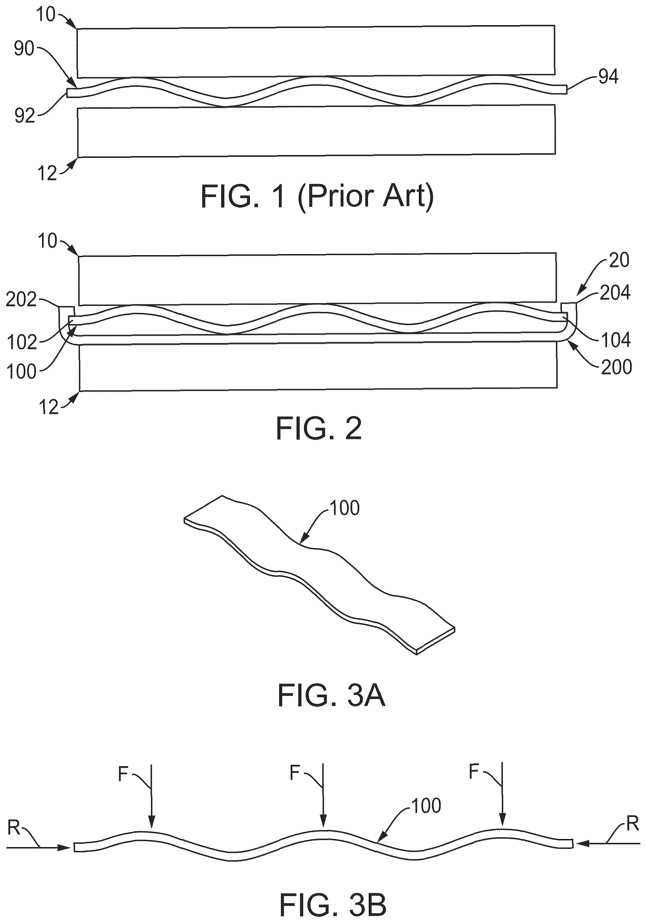

Referring to FIG. 1, a commercially available linear spring 90 of the prior art is illustrated providing a force between first surface 10 and second surface 12. Such linear springs 90 are available, for example, from the LS series of linear springs from Smalley, of Lake Zurich, Illinois. A force applied by linear spring 90 is dependent upon the spring rate and the amount of deflection of the linear spring 90 in a direction extending between the first and second surfaces 10 and 12.

However, commercially available linear springs 90 include free ends 92 and 94, and are limited in the amount of spring force they can apply before flattening out

The present disclosure is directed to a constrained linear spring 20 that can increase a spring rate of a linear spring. A constrained linear spring 20 includes a linear spring element 100 having a first end 102 and extends in a first direction to a second end 104, with one or more undulations extending in a second direction transverse to the first direction. The linear spring element 100 has a first spring rate when compressed in the second direction with the first and second ends unconstrained. The constrained linear spring also includes a constraining element 200, 210, or 220 dimensioned to contact the first and second ends 102 and 104 and at least one undulation of the linear spring element 100 when the linear spring element 100 is uncompressed. The constrained linear spring element 100 of the constrained linear spring 20 has a second spring rate higher than the first spring rate when compressed in the second direction that can be useful to counteract a forward overturning moment 50 in an airfoil 45 of a vane 40.

Referring to FIG. 2, an embodiment of a constrained linear spring 20 in accordance with the present disclosure includes a linear spring element 100. The linear spring element 100 in one or more embodiments may be the same or substantially the same as a suitable commercially available linear spring 90. In other embodiments, the linear spring element 100 may be a special-purpose linear spring element designed for a specific application.

The linear spring element 100 is formed of a resilient material. In applications for use in conjunction with a ceramic matrix composite (CMC) vane, the resilient material may be CMC or a high temperature metal alloy.

The linear spring element 100 has a first end 102 and extends in a first direction to a second end 104. The linear spring element 100 further includes one or more undulations extending in a second direction transverse to the first direction. In one or more embodiments, the linear spring element 100 may include a plurality of substantially sinusoidal undulations. As with linear spring 90, the linear spring element 100 has a first spring rate when compressed in the second direction with the first and second ends 102 and 104 unconstrained. However, in accordance with the present disclosure, first and second ends 102 and 104 are constrained in order to provide constrained linear spring 20.

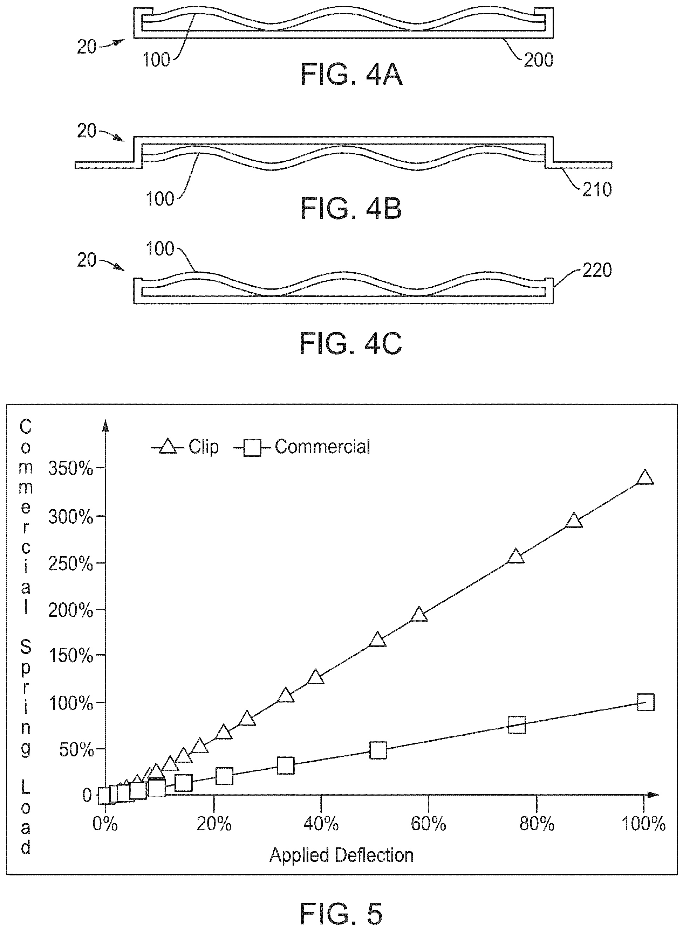

In the embodiment of FIG. 2, the constrained linear spring 20 includes a constraining element in the form of a clip 200. The clip 200 is dimensioned to contact the first and second ends 102 and 104 and at least one undulation of the linear spring element 100 when the linear spring element 100 is uncompressed. However, a first end portion 202 and a second end portion 204 of clip 200 constrain movement of first and second ends 102 and 104, respectively. With clip 200 in position to constrain the linear spring element 100, the constrained linear spring element 100 of the constrained linear spring 20 has a second spring rate higher than the first spring rate when compressed in the second direction. It has been found that in certain embodiments, the second spring rate of constrained linear spring 20 may be more than three times (>3X) the first spring rate of the unconstrained linear spring element 100, as discussed further below with respect to FIG. 5.

As illustrated in FIG. 3A, the linear spring element 100 in one or more embodiments may have a uniform width in a third direction transverse to the first and second directions. The linear spring element 100 may also include a plurality of uniform sinusoidal undulations. Referring to FIGS. 3A and 3B, the linear spring element 100 may also have a uniform first thickness. As illustrated in FIG. 3B, the linear spring element 100 of constrained linear spring 20 has restraining forces R acting on the ends when a compression force F is applied to the linear spring element 100.

In one or more embodiments, the resilient material of linear spring element 100 may be a high temperature metal alloy having a uniform first thickness. As illustrated in FIGS. 2 and 4A, in one or more embodiments of constrained linear spring 20, the constraining element may be a clip 200 that retains the first and second ends 102 and 104 of the linear spring element 100. In order to retain the first and second ends 102 and 104, the clip 200 may include hooked or otherwise-shaped ends 202 and 204 to capture the linear spring element 100 and prevent separation of the linear spring element 100 and the clip 200. When the linear spring element 100 is formed of a high temperature metal alloy of a first thickness, the clip 200 may also be formed of the high temperature metal alloy having the first thickness.

Referring to FIG. 4B, in one or more embodiments, the constraining element may be a recess 210 having a length substantially equal to a length of the linear spring element 100 in the first direction. In various embodiments, the recess 210 may be a separate element (similar to clip 200), or may be a recess 210 formed in one of a support structure or a CMC vane platform.

Referring to FIG. 4C, in one or more embodiments of constrained linear spring 20, the linear spring element 100 and the clip 220 may be integral and formed as a single piece. Accordingly, they will usually be made of the same material, whether CMC or high temperature metal alloy, and typically of the same thickness.

One or more embodiments of the present disclosure relate to a method for providing a constrained linear spring 20 having a higher spring rate. In an embodiment, a method of making a constrained linear spring 20 may include providing a linear spring element 100 of a resilient material, the linear spring element 100 having a first end 102 and extending in a first direction to a second end 104, and including one or more undulations extending in a second direction transverse to the first direction. The linear spring element 100 may have a first spring rate when compressed in the second direction with the first and second ends 102 and 104 unconstrained. The method further includes providing a constraining element 200, 210, or 220 to the linear spring element 100, the constraining element 200, 210, or 220 dimensioned to contact the first and second ends 102 and 103 and at least one undulation of the linear spring element 100 when the linear spring element 100 is uncompressed, wherein the constrained linear spring element 100 of the constrained linear spring 20 has a second spring rate higher than the first spring rate when compressed in the second direction.

In an embodiment of the method, the linear spring element 100 may have a uniform width in a third direction transverse to the first and second directions as per FIG. 3A, and may formed with a plurality of uniform sinusoidal undulations per FIGS. 3A and 3B. The provided linear spring element 100 may be made of a high temperature metal alloy having a first thickness.

Providing the constraining element 200, 210, or 220 may include providing a clip 200 that retains the first and second ends 102 and 104 of the linear spring element 100, wherein the clip may also be formed of the high temperature metal alloy having the first thickness.

In other embodiments of the method, providing the linear spring element 100 and the clip 220 may include integrally forming the linear spring element 100 and the clip 220 as a single piece.

In one or more embodiments of the method, the resilient material of linear spring element 100 may be a CMC and providing the constraining element 200, 210, or 220 may include forming a recess 210 having a length substantially equal to a length of the linear spring element 100 in the first direction.

Referring to FIG. 5, a graph shows a percentage of commercial spring load versus percentage of applied deflection comparing a commercial linear spring 90 to a constrained linear spring 20 using linear spring 90 as the linear spring element 100 in accordance with the present disclosure.

In the graph of FIG. 5., the commercial linear spring 90 has a linear relationship between spring load and applied deflection based upon a spring rate that defines the slope of the relationship. In contrast, the same commercial linear spring 90 used as linear spring element 100 in a constrained linear spring 20 applies over 300% of the spring load of the commercial linear spring 90 based upon the same applied deflection. The constrained linear spring 20 has a linear relationship between spring load and applied deflection based upon a higher effective spring rate that defines the slope of the relationship that is more than three time (>3X) the slope of the commercial linear spring 90.

Thus, for the same spatial constraints (i.e., spring dimensions and deflection), the constrained linear spring 20 in accordance with the present disclosure is capable of providing much higher spring loads. Accordingly, the constrained linear spring 20 in accordance with the present disclosure may be useful for counteracting forward overturning moments experienced in the airfoil of CMC vanes due to its small size and high spring force in comparison to commercial linear springs 90.

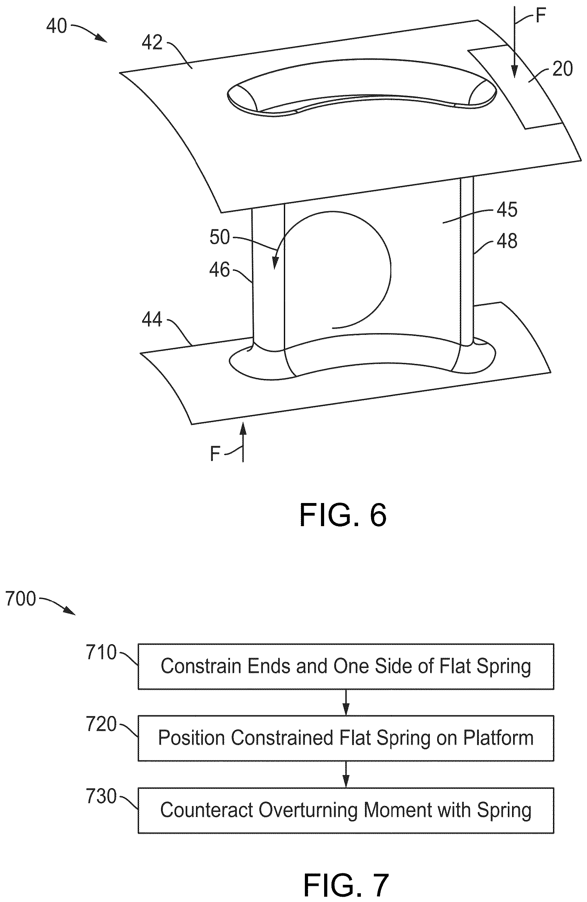

Referring to FIG. 6, a CMC vane 40 may be subject to a forward overturning moment 50. The CMC vane includes an airfoil 45 extending between an inner platform 44 and an outer platform 42. The airfoil 45 includes a leading edge 46 and a trailing edge 48. The loading on the airfoil may cause a forward overturning moment 50 to develop in the airfoil 45 that may be counteracted by applying a counteracting force to at least one of the inner platform 44 or the outer platform 42. For example, a force may be applied to a lower front portion of the inner platform 44 and/or a force may be applied to an upper rear portion of the outer platform 42. In an embodiment, a constrained linear spring 20 may be positioned between one of the platforms and an adjacent support to have the spring force supply a counter force to the platform 42 and/or 44 to counter the forward overturning moment 50 and reduce the stress in the airfoil 45 and connected portions of the CMC vane 40.

In one or more embodiments of the present disclosure, a method 700 of counteracting a forward overturning moment 50 in an airfoil 45 of a ceramic matrix composite (CMC) vane 40 may be performed with a constrained linear spring 20 in accordance with the present disclosure. The method 700 may include preparing a constrained linear spring 20 by providing a linear spring element 100 formed of resilient material, the linear spring element 100 having a first end 102 and extending in a first direction to a second end 104, and including one or more undulations extending in a second direction transverse to the first direction, wherein the linear spring element 100 has a first spring rate when compressed in the second direction with the first and second ends 102 and 104 unconstrained.

The method 700 may include a step 710 of constraining the ends 102 and 104 of linear spring 100 with a constraining element 200, 210, or 220 dimensioned to contact the first and second ends 102 and 104 and at least one undulation of the linear spring element 100 when the linear spring element 100 is uncompressed. The constrained linear spring element 100 of the constrained linear spring 20 has a second spring rate higher than the first spring rate when compressed in the second direction.

Method 700 further includes a step 720 of positioning the constrained linear spring 20 adjacent a platform 44 and/or 42 to apply a force for step 730 to counteract the forward overturning moment 50 with constrained linear spring 20 providing a counter force acting between a support surface and at least one of a lower forward portion of an inner vane platform 44 adjacent a leading edge 46 of the airfoil 45 and an upper rear portion of an outer vane platform 42 adjacent a trailing edge 48 of the airfoil 45 to counteract the forward overturning moment 50 in the airfoil 45.

In an embodiment of the method 700, the linear spring element 100 may have a uniform width in a third direction transverse to the first and second directions, and may be formed with a plurality of uniform sinusoidal undulations. In various embodiments, the constraining element may be a clip 200 having a thickness substantially identical to a thickness of the linear spring element 100, a recess 210 in one of the support surface (not shown), the inner vane platform 44, or the outer vane platform 42, or a constraining element 220 formed integrally with the linear spring element 100. In one or more embodiments of the method, at least one of the linear spring element 100 and the constraining element 200, 210, or 220 may be formed of CMC material and/or a high temperature metal alloy.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A constrained linear spring (20), comprising:
a linear spring element (100) formed of resilient material, the linear spring element (100) having a first end (102) and extending in a first direction to a second end (104), and including one or more undulations extending in a second direction transverse to the first direction, wherein the linear spring element (100) has a first spring rate when compressed in the second direction with the first and second ends (102, 104) unconstrained; and
a constraining element (200; 210; 220) dimensioned to contact the first and second ends (102, 104) and at least one undulation of the linear spring element (100) when the linear spring element (100) is uncompressed, wherein the constrained linear spring element (100) of the constrained linear spring (20) has a second spring rate higher than the first spring rate when compressed in the second direction.

2. The linear spring of claim 1, wherein the linear spring element (100) has a uniform width in a third direction transverse to the first and second directions.

3. The linear spring of claim 1 or 2, wherein the linear spring element (100) includes a plurality of uniform sinusoidal undulations.

4. The linear spring of claim 1, 2 or 3, wherein the resilient material is a high temperature metal alloy having a first thickness.

5. The linear spring of claim 4, wherein the constraining element (200; 220) is a clip (200; 220) that retains the first and second ends (102, 104) of the linear spring element (100), and optionally wherein the clip (200; 220) is formed of the high temperature metal alloy having the first thickness.

6. The linear spring of claim 5, wherein the linear spring element (100) and the clip (200; 220) are integral and formed as a single piece.

7. The linear spring of claim 1, 2 or 3, wherein the resilient material is a ceramic matrix composite (CMC).

8. The linear spring of any of claims 1 to 4 and 7, wherein the constraining element (210) is a recess (210) having a length substantially equal to a length of the linear spring element (100) in the first direction.

9. A method of making a constrained linear spring (20), comprising:
providing a linear spring element (100) of a resilient material, the linear spring element (100) having a first end (102) and extending in a first direction to a second end (104), and including one or more undulations extending in a second direction transverse to the first direction, wherein the linear spring element (100) has a first spring rate when compressed in the second direction with the first and second ends (102, 104) unconstrained; and
providing a constraining element (200; 210; 220) to the linear spring element (100), the constraining element (200; 210; 220) dimensioned to contact the first and second ends (102, 104) and at least one undulation of the linear spring element (100) when the linear spring element (100) is uncompressed, wherein the constrained linear spring element (100) of the constrained linear spring (20) has a second spring rate higher than the first spring rate when compressed in the second direction.

10. The method of claim 9, wherein the linear spring element (100) has a uniform width in a third direction transverse to the first and second directions, and is formed with a plurality of uniform sinusoidal undulations.

11. The method of claim 9 or 10, wherein the resilient material is a high temperature metal alloy having a first thickness.

12. The method of claim 11, wherein providing the constraining element (200; 220) includes providing a clip (200; 220) that retains the first and second ends (102, 104) of the linear spring element (100), wherein the clip (200; 220) is formed of the high temperature metal alloy having the first thickness, optionally wherein providing the linear spring element (100) and the clip (200; 220) includes integrally forming the linear spring element (100) and the clip (200; 220) as a single piece.

13. The method of claim 9 or 10, wherein the resilient material is a ceramic matrix composite (CMC) and providing the constraining element includes forming a recess (210) having a length substantially equal to a length of the linear spring element (100) in the first direction.

14. A method of counteracting a forward overturning moment (50) in an airfoil (45) of a ceramic matrix composite (CMC) vane (40), comprising:
making a constrained linear spring (20) using the method of claim 9 or 10; and
applying the linear spring (20) to provide a force between a support surface and at least one of a lower forward portion of an inner vane platform (44) adjacent a leading edge (46) of the airfoil (45) and an upper rear portion of an outer vane platform (42) adjacent a trailing edge (48) of the airfoil (45) to counteract the forward overturning moment (50) in the airfoil (45).

15. The method of claim 14, wherein the constraining element (200; 210; 220) is selected from the group consisting of:
a clip (200; 220) having a thickness substantially identical to a thickness of the linear spring element (100);
a recess (210) in one of the support surface, the inner vane platform (44), or the outer vane platform (42); and
a constraining element (220) formed integrally with the linear spring element (100), and/or wherein at least one of the linear spring element (100) and the constraining element (200; 210; 220) is formed of CMC material and/or a high temperature metal alloy.
